(19) Europäisches Patentamt

European Patent Office

Office européen des brevets

(11) **EP 4 120 197 B1**

(12) **EUROPÄISCHE PATENTSCHRIFT**

(45) Veröffentlichungstag und Bekanntmachung des Hinweises auf die Patenterteilung:
**27.08.2025  Patentblatt 2025/35**

(21) Anmeldenummer: **21187663.6**

(22) Anmeldetag: **26.07.2021**

(51) Internationale Patentklassifikation (IPC):
***G06T 11/00*** (2006.01)

(52) Gemeinsame Patentklassifikation (CPC):
**G06T 11/006;** G06T 2211/412; G06T 2211/424;
G06T 2211/448

(54) **VERBESSERTE BEWEGUNGS-ARTEFAKT-KOMPENSATION DURCH METALL-ARTEFAKT-REDUKTION**

IMPROVED COMPENSATION FOR MOTION ARTIFACTS BY MEANS OF METAL ARTIFACT REDUCTION

COMPENSATION AMÉLIORÉE DU MOUVEMENT DES ARTEFACTS AU MOYEN DE LA RÉDUCTION DES ARTEFACTS MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2021  EP 21184986**

(43) Veröffentlichungstag der Anmeldung:
**18.01.2023  Patentblatt 2023/03**

(73) Patentinhaber:
- **DENTSPLY SIRONA Inc.**
  **York, PA 17401 (US)**
- **Sirona Dental Systems GmbH**
  **64625 Bensheim (DE)**

(72) Erfinder:
- **Maur, Susanne**
  **64625 Bensheim (DE)**
- **Hülsbusch, Markus**
  **64625 Bensheim (DE)**

(74) Vertreter: **Taor, Simon Edward William**
**Venner Shipley LLP**
**200 Aldersgate**
**London EC1A 4HD (GB)**

(56) Entgegenhaltungen:
- **HAHN ANDREAS ET AL: "Two methods for reducing moving metal artifacts in cone-beam CT", MEDICAL PHYSICS., vol. 45, no. 8, August 2018 (2018-08-01), US, pages 3671 - 3680, XP055872245, ISSN: 0094-2405, DOI: 10.1002/ mp.13060**
- **BREHM M ET AL: "Artifact-resistant motion estimation with a patient-specific artifact model for motion-compensated cone-beam CT", MEDICAL PHYSICS 2013 JOHN WILEY AND SONS LTD USA, vol. 40, no. 10, 2013, XP012178423, DOI: 10.1118/1.4820537**
- **MAUR SUSANNE: "Geometrische Autokalibrierung für die dentale Volumentomographie", 22 June 2020 (2020-06-22), Heidelberg, Germany, pages 1 - 174, XP055872274, Retrieved from the Internet <URL:http://www.ub.uni-heidelberg.de/archiv/ 28433> [retrieved on 20211213]**

**Beschreibung**

## TECHNISCHES GEBIET DER ERFINDUNG

Die vorliegende Erfindung bezieht sich auf Verfahren zur digitalen Volumen Tomographie (DVT) im dentalen Bereich. Die vorliegende Erfindung bezieht sich insbesondre auf eine Reduktion von Bewegungs-Artefakten in einer DVT Aufnahme.

## HINTERGRUND DER ERFINDUNG

Bei einer DVT Aufnahme stehen sich die bildgebenden Komponenten Röntgenstrahler und Röntgendetektor einander gegenüber und rotieren um den Patienten. Hierbei wird eine Sequenz von Röntgenprojektionsaufnahmen erzeugt, welche ein Sinogramm bilden. Unter Kenntnis der Projektionsgeometrie wird aus dem Sinogramm ein Volumen rekonstruiert. Die Projektionsgeometrie beschreibt die geometrischen Eigenschaften des DVT-Geräts und dessen Trajektorie während der Aufnahme. Sie kann mittels Projektionsmatrizen ausgedrückt werden.

Bei einer DVT-Aufnahme führen Röntgen-opake Strukturen wie Metalle zu Bildartefakten im rekonstruierten Volumen. Die Bildartefakte entstehen, wenn die Sensitivität des Röntgendetektors nicht ausreicht, um die Röntgen-Abschwächung physikalisch genau genug abzubilden. Dies führt vor allem hinter stark absorbierenden Strukturen wie Metallen zu Problemen, da dort das Rauschen überwiegt. Dies führt zu inkonsistenten Werten im Rekonstruktionsverfahren, welche sich oft in Streifen-Artefakten um die Metallbereiche, falschen Absorptionswerten in den Metallbereichen und falsch abgebildeten Metallkonturen im Volumen darstellen.

Bewegt sich der Patient während der DVT-Aufnahme oder ist die Gerätekalibrierung veralteten, so wird im Rekonstruktionsverfahren die falsche Projektionsgeometrie angewendet. Dies führt zu Bewegungsartefakten im rekonstruierten Volumen aufgrund der Verrechnung von inkonsistenten Daten. Ein Verfahren zur Bewegungs-Artefakt-Kompensation (MAC), bzw. zur geometrischen Kalibrierung der Aufnahme, kann die Projektionsgeometrie aus einer gegebenen Patientenaufnahme schätzen. Die Metallartefakte stören die Konvergenz und/oder die Genauigkeit der MAC, da diese eine Schätzung der Projektionsgeometrie anhand eines Ähnlichkeitsmaßes zwischen einem simulierten Sinogramm des rekonstruierten Volumens und dem gemessenen Sinogramm durchführt. Das simulierte Sinogramm wird durch Projektion des Artefakt-behafteten Volumens erzeugt. Die Metallartefakte führen zu starken Dateninkonsistenzen.

Es wird ferner auf folgende Dokumente verwiesen:

Hahn Andreas et al, "Two methods for reducing moving metal artifacts in cone-beam CT", Medical Physics., US, (201808), vol. 45, no. 8, doi:10.1002/mp.13060, ISSN 0094-2405, pages 3671 - 3680, XP055872245A.

Brehm M. et al, "Artifact-resistant motion estimation with a patient-specific artifact model for motion-compensated cone-beam CT", Medical Physics 2013 John Wiley and Sons Ltd USA, (2013), vol. 40, no. 10, doi:10.1118/1.4820537, XP012178423A.

Maur Susanne, "Geometrische Autokalibrierung für die dentale Volumentomographie", Heidelberg, Germany, (20200622), pages 1 - 174, URL: http://www.ub.uniheidelberg.de/archiv/28433, (20211213), XP055872274A.

## OFFENBARUNG DER ERFINDUNG

Das Ziel der vorliegenden Erfindung ist ein Verfahren zur geometrischen Kalibrierung einer digitalen Volumen Tomographie (DVT) Aufnahme im dentalen Bereich bereitzustellen, welches eine verbesserte Bewegungs-Artefakt-Kompensation (MAC) durch Metall-Artefakt-Reduktion (MAR) ermöglichen kann.

Dieses Ziel wird durch das Verfahren nach Anspruch 1 erreicht. Die Gegenstände der abhängigen Ansprüche beziehen sich auf Weiterentwicklungen und bevorzugte Ausführungsformen.

Das erfindungsgemäße Verfahren dient zur geometrischen Kalibrierung einer DVT-Aufnahme im dentalen Bereich. Es umfasst folgende Schritte: (S1) Rekonstruktion eines ersten Volumens aus einem Sinogramm mit einer initialen Projektionsgeometrie; (S2) Detektion der Metallbereiche in dem Sinogramm; (S3) Korrektur der Metallbereiche im Sinogramm; (S4) Rekonstruktion eines zweiten Volumens aus dem korrigiertem Sinogramm aus dem Schritt (S3) mit der initialen oder einer variierten Projektionsgeometrie; (S5) geometrische Kalibrierung durch Variation der Projektionsgeometrie und Bewertung anhand eines Ähnlichkeitsmaßes zwischen einem simuliertem Sinogramm des rekonstruierten zweiten Volumens und dem Sinogramm bzw. dem korrigierten Sinogramm, wobei das simulierte Sinogramm aus dem rekonstruierten zweiten Volumen unter Verwendung der variierten Projektionsgeometrie berechnet wird; wobei mindestens ein Teilbereich der folgenden Daten: a) Sinogramm aus Schritt (S1); b) korrigiertes Sinogramm aus Schritt (S3); c) simuliertes Sinogramm; d) Zwischenergebnis zur Berechnung des Ähnlichkeitsmaßes abgeleitet aus einem der genannten Sinogramme a)-c) während der Berechnung des Ähnlichkeitsmaßes anders ausgewertet wird als die übrigen Bereiche der Daten , wobei der genannte Teilbereich die Metallbereiche aus Schritt (S2) einschließt.

Ein wesentliches Merkmal der vorliegenden Erfindung ist die Verwendung einer Metall-Artefakt-Korrektur zur Rekonstruktion des in der MAC verwendeten Volumens und die Verbesserung der MAC durch Sonderbehandlung vorzugsweise Filterung/Gewichtung der Metallbereiche während der Berechnung des Ähnlichkeitsmaßes. Ein weiterer wesentlicher vorteilhafter Effekt der vorliegenden Erfindung ist die erhöhte Genauigkeit und schnellere Konvergenz der MAC.

## KURZBESCHREIBUNG DER ZEICHNUNGEN

In der nachfolgenden Beschreibung wird die vorliegende Erfindung anhand von beispielhaften Ausführungsformen und unter Bezugnahme auf die Zeichnungen näher erläutert, wobei

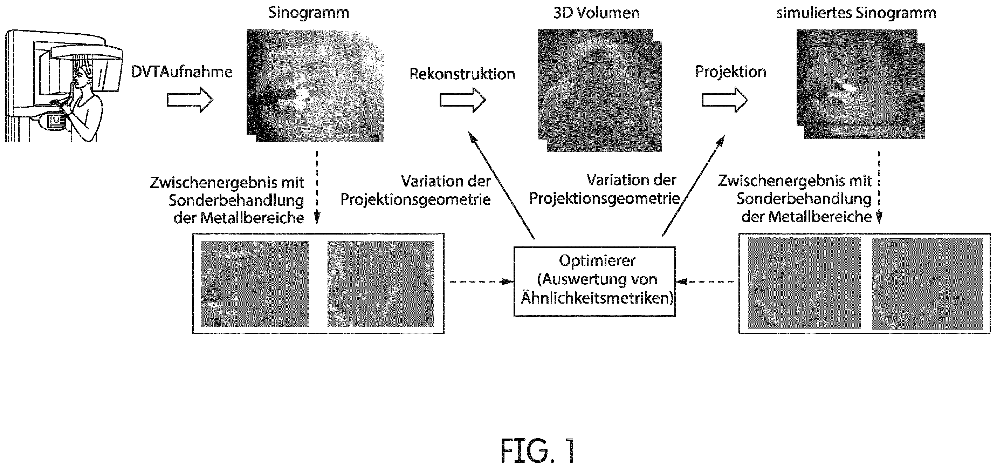

Abb.1 - zeigt eine Übersicht des Verfahrens zur geometrischen Kalibrierung einer DVT-Aufnahme im dentalen Bereich nach einer Ausführungsform;

Abb.2 - zeigt ein Flussdiagramm gemäß einer weiteren Ausführungsform;

Abb.3 - zeigt ein Flussdiagramm gemäß einer weiteren Ausführungsform;

Abb.4 - zeigt ein Flussdiagramm gemäß einer weiteren Ausführungsform;

Abb.5 - zeigt ein Flussdiagramm gemäß einer weiteren Ausführungsform;

Abb.6 - zeigt ein computergestütztes DVT-System, auf dem das erfindungsgemäße Verfahren durchgeführt werden kann.

Die in den Zeichnungen gezeigten Referenznummern bezeichnen die unten aufgeführten Elemente, auf die in der nachfolgenden Beschreibung der beispielhaften Ausführungsformen Bezug genommen wird.

1. DVT-System
2. Röntgengerät
3. Röntgenstrahler
4. Röntgendetektor
5. Bedienungseinheit
6. Kopffixierung
7. Aufbiss
8. Rechner
9. Anzeige

### Definitionen

| | |
|---|---|
| $I_1, I_2$: | Projektionsbilder |
| $\bar{I}$: | Mittelwert des Bildes $I$ |
| $N$: | Anzahl Pixel im Projektionsbild |
| $I(u,v)$: | Pixelwert des Projektionsbildes $I$ an der Stelle ($u,v$) |
| $s(I_1, I_2)$: | Ähnlichkeitsmaß für Projektionsbilder |
| $MSE(I_1, I_2)$: | Mean Square Error |
| $MAD(I_1, I_2)$: | Mean Absolute Difference |
| $NCC1(I_1, I_2)$: | Normalized Cross Correlation |
| $NCC2(I_1, I_2)$: | Pixel-based Normalized Cross Correlation |
| $GC1(I_1, I_2)$: | Gradient Correlation 1 |
| $GC2(I_1, I_2)$: | Gradient Correlation 2 |
| $GI1(I_1, I_2)$: | Gradient Information |
| $GI2(I_1, I_2)$: | Gradient Information with linear Scaling |

$GO(I_1, I_2)$:    Gradient Orientation
$LoG$:    Laplace of Gaussian
$MI(A, B)$:    Mutual Information

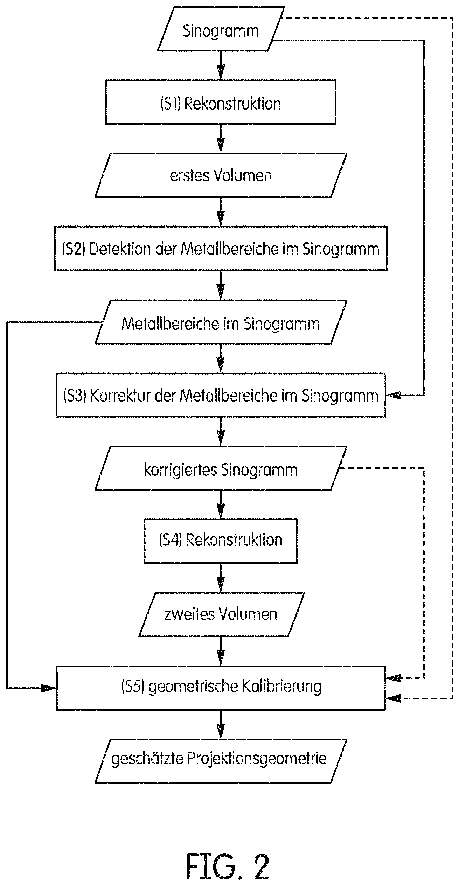

Das erfindungsgemäße Verfahren dient zur geometrischen Kalibrierung einer DVT-Aufnahme im dentalen Bereich. Wie in Abb. 2 gezeigt umfasst es folgende Schritte: (S1) Rekonstruktion eines ersten Volumens (1) aus einem Sinogramm mit einer initialen Projektionsgeometrie; (S2) Detektion der Metallbereiche in dem Sinogramm; (S3) Korrektur der Metallbereiche im Sinogramm; (S4) Rekonstruktion eines zweiten Volumens (2) aus dem korrigiertem Sinogramm aus dem Schritt (3) mit der initialen oder einer variierten Projektionsgeometrie; (S5) geometrische Kalibrierung durch Variation der Projektionsgeometrie und Bewertung anhand eines Ähnlichkeitsmaßes zwischen einem simuliertem Sinogramm des rekonstruierten zweiten Volumens (2) und dem Sinogramm bzw. dem korrigierten Sinogramm, wobei das simulierte Sinogramm aus dem rekonstruierten zweiten Volumen (2) unter Verwendung der variierten Projektionsgeometrie berechnet wird, wobei mindestens ein Teilbereich der folgenden Daten: a) Sinogramm aus Schritt (S1); b) korrigiertem Sinogramm aus Schritt (S3); c) simuliertem Sinogramm; d) Zwischenergebnis zur Berechnung des Ähnlichkeitsmaßes abgeleitet aus einem der genannten Sinogramme a)-c) während der Berechnung des Ähnlichkeitsmaßes anders als die übrigen Bereiche der Daten ausgewertet wird, wobei der genannte Teilbereich die Metallbereiche aus Schritt (S2) einschließt.

Metalle oder künstliche, röntgen-opake Strukturen bilden im Sinogramm deutliche Konturen. Im simulierten Sinogramm sind diese Konturen meist undeutlich oder verfälscht aufgrund der ungenauen Projektionsgeometrie im Rekonstruktionsverfahren, der fehlenden physikalischen Information in den Metallbereichen und der Metallartefakte im rekonstruierten Volumen. Durch die Verwendung einer Metall-Artefakt-Reduktion (MAR) in den Schritten (S2) - (S4) können die Metallartefakte im rekonstruierten Volumen reduziert, aber meist nicht vollständig oder physikalisch korrekt wiederhergestellt werden. Diese inkonsistenten Metallbereiche behindern die Konvergenz der geometrischen Kalibrierung, bzw. Bewegungs-Artefakt-Korrektur (MAC). Durch eine andere Auswertung der Metallbereiche während der Berechnung des Ähnlichkeitsmaßes kann die Konvergenz der geometrischen Kalibrierung verbessert und in vielen Fällen beschleunigt werden, sowie ihre Genauigkeit erhöht werden.

Die Teilbereiche in Schritt (S5) sind vorzugsweise größer als die detektierten Metallbereiche aus Schritt (S2), so dass auch Artefakte an den Rändern der Metallbereiche erfasst werden können. Die Korrektur der Metallbereiche im Sinogramm in Schritt (S3) kann ebenfalls auf größeren Bereichen durchgeführt werden, um Ungenauigkeiten in der Detektion der Metallbereiche in Schritt (S2) zu kompensieren.

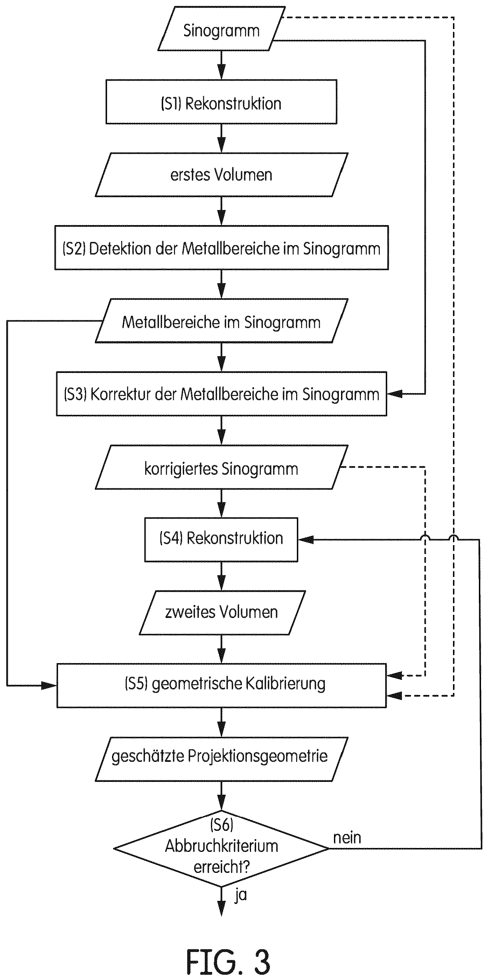

Abbildung 3 zeigt eine bevorzugte Ausführungsform, in welcher das Verfahren nach dem Schritt (S5) den folgenden Schritt umfasst: (S6) Wiederholung der Schritte (S4)-(S5). Dies dient der iterativen Verbesserung der MAC. Die iterative Wiederholung wird abgebrochen, wenn ein Abbruchkriterium, bzw. Konvergenzkriterium, erreicht ist. Mögliche Abbruchkriterien sind: a) ob die Änderung der Projektionsgeometrie kleiner als ein Schwellwert ist; b) ob die Änderung im finalen Volumen kleiner als ein Schwellwert ist; c) ob die Anzahl der Iterationsschritte größer als ein Schwellwert ist; d) ob die Rechenzeit größer als ein Schwellwert ist.

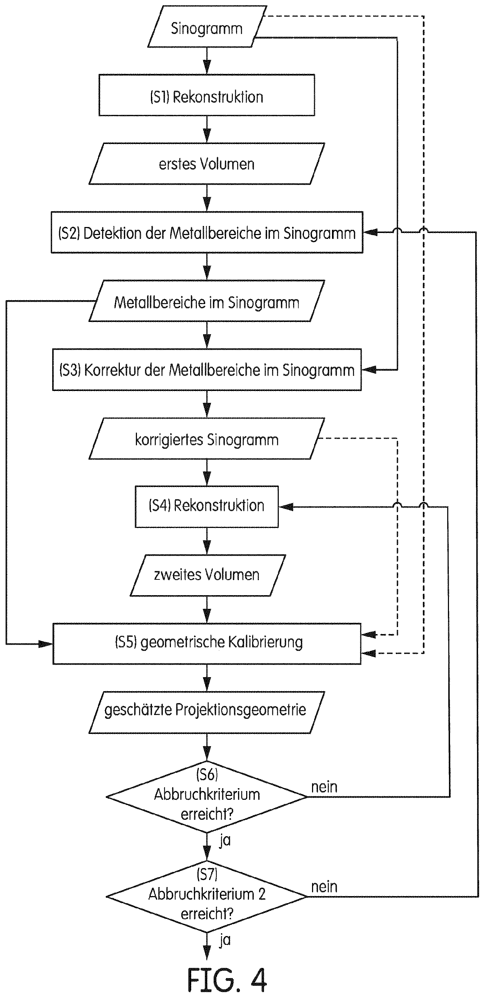

In einer weiteren bevorzugten Ausführungsform umfasst das Verfahren nach dem Schritt (S5) den folgenden Schritt: (S7) Wiederholung der Schritte (S2)-(S5) oder (S2)-(S6). Dies dient zur iterativen Verbesserung der MAR durch die Verwendung des Zwischenergebnisses der MAC. Dies bedingt auch eine iterative Verbesserung der MAC. Die iterative Wiederholung wird abgebrochen, wenn ein zweites Abbruchkriterium, bzw. Konvergenzkriterium, erreicht ist. Mögliche zweite Abbruchkriterien sind: a) ob die Änderung der Projektionsgeometrie kleiner als ein Schwellwert ist; b) ob die Änderung im finalen Volumen kleiner als ein Schwellwert ist; c) ob die Anzahl der Iterationsschritte größer als ein Schwellwert ist; d) ob die Rechenzeit größer als ein Schwellwert ist, e) ob die Menge an Metall im Volumen oder Sinogramm größer als ein Schwellwert ist. Abbildung 4 zeigt diese Ausführungsform kombiniert mit vorangegangenen bevorzugten Ausführungsformen.

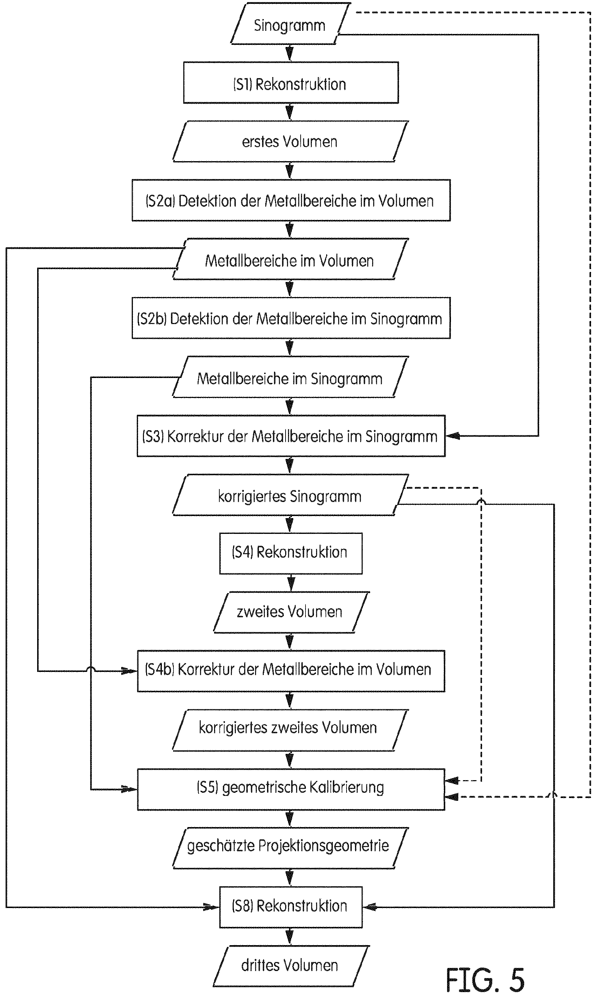

In einer weiteren bevorzugten Ausführungsform umfasst das Verfahren nach dem Schritt (5) den folgenden Schritt: (S8) Rekonstruktion eines dritten Volumens (3) unter Berücksichtigung der geschätzten Projektionsgeometrie und Anwendung einer Metall-Artefakt- Korrektur. Das dritte Volumen berücksichtigt die Ergebnisse der Korrekturverfahren MAR und MAC. Abbildung 5 zeigt diese Ausführungsform kombiniert mit weiteren bevorzugten Ausführungsformen.

In einer weiteren bevorzugten Ausführungsform besteht die Detektion der Metallbereiche im Sinogramm in Schritt (S2) aus: (a) Detektion der Metallbereiche im ersten Volumen (1); und (b) Projektion der detektierten Metallbereiche ins Sinogramm. Die Detektion der Metallbereiche im Volumen hat den Vorteil, dass sie meist robuster oder einfacher umzusetzen ist als eine direkte Detektion der Metallbereiche im Sinogramm. Durch die Anwendung der Projektionsgeometrie, bzw. der geschätzten Projektionsgeometrie, können die detektierten Metallbereiche ins Sinogramm übertragen werden. Die im Volumen detektierten Metallbereiche können vergrößert werden, um eine ungenaue Projektionsgeometrie und/oder eine ungenaue Detektion der Metallbereiche zu kompensieren.

In einer weiteren bevorzugten Ausführungsform besteht die Detektion der Metallbereiche im Sinogramm in Schritt (2) aus: (a') Erzeugung eines simulierten Sinogramms des ersten Volumens (1); und (b') Detektion der Metallbereiche im simulierten Sinogramm aus Schritt (S2)(a) und Übertragung der detektierten Metallbereiche auf das Sinogramm. Die Detektion der Metallbereiche ist im simulierten Sinogramm einfacher als im Sinogramm, da bei der Erzeugung des simulierten Sinogramms eine vereinfachte Darstellung der überlagerten Strukturen möglich ist. Die im simulierten Sinogramm detektierten Metallbereiche können auf das Sinogramm übertragen werden, da bei der Erzeugung des simulierten Sinogramms die für das Sinogramm geschätzte Projektionsgeometrien verwendet wurde.

In einer weiteren bevorzugten Ausführungsform umfasst das Verfahren nach dem Schritt (S4) folgenden Schritt: (a) Bestimmung der Metallbereiche im zweiten Volumen (2) mithilfe der detektierten Metallbereiche im Sinogramm. Die Bestimmung der Metallbereiche im zweiten Volumen erfolgt durch Rückprojektion oder Rekonstruktion der detektierten Metallbereiche im Sinogramm mithilfe der Projektionsgeometrie, bzw. der geschätzten Projektionsgeometrie. Dieser Schritt ist erforderlich, wenn die Detektion der Metallbereiche im simulierten Sinogramm erfolgt ist.

In einer weiteren bevorzugten Ausführungsform umfasst das Verfahren nach dem Schritt (S4) folgenden Schritt: (b) Korrektur der Metallbereiche im zweiten Volumen (2) welches wiederum aus einem oder mehreren der folgenden Schritte besteht: (b1) Füllen der Metallbereiche im zweiten Volumen (2) mit Werten aus dem rekonstruierten ersten Volumen (1) oder künstlichen Werten hinweisend auf die Metallbereiche; (b2) Gewichtetes Überblenden den Werten aus Schritt (S4)(b1) mit den Werten aus dem zweiten Volumens (2). Dies hat den Vorteil, dass die Metallbereiche im simulierten Sinogramm in Schritt (S5) besser für den Vergleich mit dem Sinogramm und die Berechnung des Ähnlichkeitsmaßes geeignet sind. Abbildung 5 zeigt diese Ausführungsform kombiniert mit weiteren bevorzugten Ausführungsformen.

In einer weiteren bevorzugten Ausführungsform besteht die Korrektur der Metallbereiche im Sinogramm in Schritt (S3) aus einem oder mehreren der folgenden Schritte: (a) Füllen der Metallbereiche im korrigierten Sinogramm mit neuen Pixelwerten, welche entweder aus den Nachbar-Pixeln berechnet werden oder künstlichen Pixelwerten entsprechen; (b) Gewichtetes Überblenden der neuen Pixelwerte aus Schritt (S3)(a) mit den Pixelwerten dem Sinogramm. Die Metallbereiche im Sinogramm können aufgrund der starken Absorption physikalisch nicht korrekt gemessen werden. Durch Ersetzung mit plausiblen Pixelwerte kann die Entstehung von Metallartefakten während der Rekonstruktion vermieden werden. Die neuen, plausiblen Pixelwerte können künstliche Werte sein oder aus Nachbar-Pixeln im Sinogramm berechnet werden. Durch ein gewichtetes Überblenden der neuen Pixelwerte mit den ursprünglichen Pixelwerten wird ein Teil der unsicheren physikalischen Information erhalten.

In einer weiteren bevorzugten Ausführungsform umfasst die andere Auswertung der Teilbereiche in mindestens einem der genannten Daten während der Berechnung des Ähnlichkeitsmaßes in Schritt (S5) eine pixelweise Gewichtung, welche vorzugsweise in dem Wertebereich 0 bis 1 liegt. Dies hat den Vorteil, dass die Metallbereiche und deren Umgebung schwächer in die Berechnung des Ähnlichkeitsmaßes eingehen und somit die Konvergenz der MAC nicht oder nicht so stark behindern.

In einer weiteren bevorzugten Ausführungsform umfasst die andere Auswertung der Teilbereiche in mindestens einem der genannten Daten während der Berechnung des Ähnlichkeitsmaßes in Schritt (S5) eine örtliche Filterung. Dies hat den Vorteil, dass die Metallbereiche und deren Umgebung schwächer in die Berechnung des Ähnlichkeitsmaßes eingehen und somit die Konvergenz der MAC nicht oder nicht so stark behindern.

In einer weiteren bevorzugten Ausführungsform wird die Projektionsgeometrie oder die geschätzte Projektionsgeometrie der DVT-Aufnahme relativ zum Patientenkopf beschrieben durch geometrische Parameter. Die Projektionsgeometrie wird vorzugsweise mit intrinsischen Parametern und extrinsischen Parametern beschrieben, wobei die intrinsischen Parameter die relative Lage zwischen Röntgenstrahler und Röntgendetektor sowie deren Auflösung umfassen und die extrinsischen Parameter eine Transformation bestehend aus Rotation und Translation pro Projektionsbild und selektiertem Teilbereich des Volumens umfassen.

In einer weiteren bevorzugten Ausführungsform können zusätzlich zu den Bilddaten auch eine initiale Projektionsgeometrie, z.B. in Form von Daten einer Gerätekalibrierung, als Eingabedaten den Verfahren zur geometrischen Kalibrierung (Schritt S5) übergeben werden.

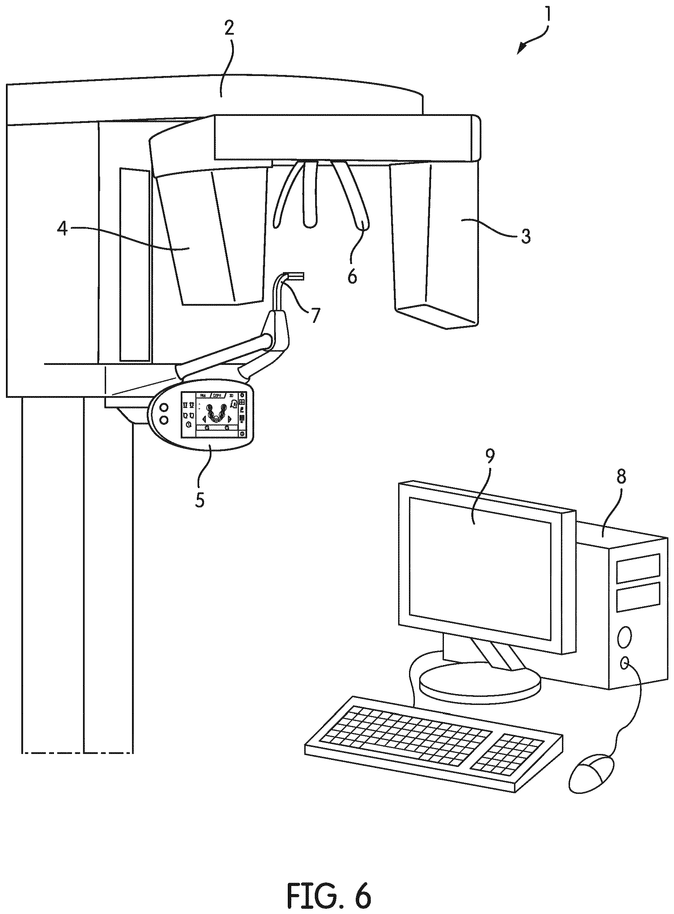

Das erfindungsgemäße Verfahren ist ein Computer implementierbares Verfahren, und kann auf einem computergestützten DVT-System (1) ausgeführt werden. Abb. 6 zeigt ein Ausführungsbespiel für ein DVT-System (1). Hierzu umfasst die vorliegende Erfindung auch ein Computerprogramm mit computerlesbarem Code. Das Computerprogramm kann auf einem Datenspeicher bereitgestellt werden. Das computergestützte DVT-System (1) umfasst ein Röntgengerät (2) zur Durchführung der Patientenaufnahme, womit das Sinogramm erzeugt wird. Das Röntgengerät (2) hat einen Röntgenstrahler (3) und Röntgendetektor (4), die während der Aufnahme um den Patientenkopf gedreht werden. Die Trajektorie des Röntgenstrahlers (3) und des Röntgendetektors (4) während der Aufnahme kann eine Kreisbahn beschreiben. Alternativ kann sie eine davon abweichende Form annehmen. Bei einer gleichzeitigen Ansteuerung mehrerer Aktuatoren, kann eine von einer reinen Kreisbahn abweichende Gerätetrajektorie um den Patientenkopf erzielt werden. Der Patientenkopf wird mit dem Aufbiss (7) und der Kopffixierung (6) im Röntgengerät positioniert. Das computergestützte DVT-System (1) umfasst eine Bedienungseinheit (5), vorzugsweise einen Rechner (8) oder eine Recheneinheit, die mit dem Röntgengerät (2) verbunden werden kann, und vorzugsweise eine Anzeige (9), u.a. um die Datensätze zu visualisieren. Der Rechner (8) kann über ein lokales Netzwerk (nicht gezeigt) oder alternativ über das Internet mit dem Röntgengerät (2) verbunden werden. Der Rechner (8) kann Teil einer Cloud sein. Alternativ kann der Rechner (8) in das Röntgengerät (2) integriert werden. Die Berechnungen können alternativ in der Cloud stattfinden. Der Rechner (8) führt das Computerprogramm aus und liefert die Datensätze, u.a. auch für die Visulisierung auf der Anzeige (9). Die Anzeige (9) kann räumlich von dem Röntgengerät (2) getrennt sein. Der Rechner (8) kann vorzugsweise auch das Röntgengerät (2) steuern. Alternativ können separate Rechner für die Steuerung und die Rekonstruktion benutzt werden.

Gemäß der vorliegenden Erfindung können die Datensätze, die durch die oben aufgeführte Ausführungsformen erzeugt werden, zur Visualisierung, insbesondere für diagnostische Zwecke, einem Arzt vorgelegt werden, vorzugsweise mittels einer Anzeige (9) oder eines Ausdrucks

*Ähnlichkeitsmaß*

In dem Nachfolgenden werden die Ähnlichkeitsmaße $s(I_1, I_2)$ im Detail erklärt. Das Ähnlichkeitsmaß ist eine skalare Größe, die eine Ähnlichkeit zwischen zwei Projektionsbildern $I_1$, $I_2$ beschreibt. Statt Ähnlichkeitsmaßen können auch negierte Differenzmaße zum Einsatz kommen. Ähnlichkeitsmaße können in zwei Klassen unterteil werden: Pixel-basierte Ähnlichkeitsmaße und Histogramm-basierte Ähnlichkeitsmaße.

*Beispiele zu Pixel-basierten Ähnlichkeitsmaßen:*

a) Mean Square Error

$$MSE(I_1, I_2) = \sqrt{\frac{1}{N} \sum_{u,v \in I} (I_1(u,v) - I_2(u,v))^2}$$

b) Mean Absolute Difference

$$MAD(I_1, I_2) = \frac{1}{N} \sum_{u,v \in I} |I_1(u,v) - I_2(u,v)|$$

c) Normalized Cross Correlation

$$NCC1(I_1, I_2) = \frac{\sum_{u,v \in I}(I_1(u,v) - \overline{I_1})(I_2(u,v) - \overline{I_2})}{\sqrt{\sum_{u,v \in I}(I_1(u,v) - \overline{I_1})^2}\sqrt{\sum_{u,v \in I}(I_2(u,v) - \overline{I_2})^2}}$$

d) Pixel-based Normalized Cross Correlation

$$NCC2(I_1, I_2) = \sum_{u,v \in I} \frac{(I_1(u,v) - \overline{I_1})(I_2(u,v) - \overline{I_2})}{\|(I_1(u,v) - \overline{I_1})\| \, \|(I_2(u,v) - \overline{I_2})\|}$$

e) Gradient Correlation 1

$$GC1(I_1, I_2) = \frac{1}{2}(NCC1(\frac{\partial I_1}{\partial u}, \frac{\partial I_2}{\partial u}) + NCC1(\frac{\partial I_1}{\partial v}, \frac{\partial I_2}{\partial v})),$$

mit *NNC1* aus c).

f) Gradient Correlation 2

$$GC2(I_1, I_2) = \frac{1}{2}(NCC2(\frac{\partial I_1}{\partial u}, \frac{\partial I_2}{\partial u}) + NCC2(\frac{\partial I_1}{\partial v}, \frac{\partial I_2}{\partial v})),$$

mit NNC2 aus d).

g) Gradient Information

$$GI1(I_1, I_2) = \frac{1}{N} \sum_{u,v \in I} g(u, v) \min\left( \sqrt{\frac{\partial I_1}{\partial u}^2 + \frac{\partial I_1}{\partial v}^2}, \sqrt{\frac{\partial I_2}{\partial u}^2 + \frac{\partial I_2}{\partial v}^2} \right)$$

$$\text{mit } g(u, v) = \frac{\theta(u,v)+1}{2} \text{ und } \theta(u, v) = \frac{\frac{\partial I_1}{\partial u}\frac{\partial I_2}{\partial u} + \frac{\partial I_1}{\partial v}\frac{\partial I_2}{\partial v}}{\sqrt{\frac{\partial I_1}{\partial u}^2 + \frac{\partial I_1}{\partial v}^2} \sqrt{\frac{\partial I_2}{\partial u}^2 + \frac{\partial I_2}{\partial v}^2}}.$$

h) Gradient Information with linear Scaling

$$GI2(I_1, I_2) = \frac{1}{N} \sum_{u,v \in I} g(u, v) \min\left( \sqrt{\frac{\partial I_1}{\partial u}^2 + \frac{\partial I_1}{\partial v}^2}, \alpha \sqrt{\frac{\partial I_2}{\partial u}^2 + \frac{\partial I_2}{\partial v}^2} \right)$$

$$\text{mit } g(u, v) = \frac{\theta(u,v)+1}{2} \text{ und } \theta(u, v) = \frac{\frac{\partial I_1}{\partial u}\frac{\partial I_2}{\partial u} + \frac{\partial I_1}{\partial v}\frac{\partial I_2}{\partial v}}{\sqrt{\frac{\partial I_1}{\partial u}^2 + \frac{\partial I_1}{\partial v}^2} \sqrt{\frac{\partial I_2}{\partial u}^2 + \frac{\partial I_2}{\partial v}^2}} \text{ und } \alpha \text{ als Skalierungsfaktor.}$$

Hierbei sind $g(u, v)$ und $\theta(u, v)$ Beispiele für Zwischenergebnisse zur Berechnung des Ähnlichkeitsmaßes abgeleitet aus mindestens einem der Sinogramme a)-c). Wobei a) das Sinogramm aus Schritt (S1); b) das korrigierte Sinogramm aus Schritt (S3); und c) das simulierte Sinogramm bezeichnet.

i) Gradient Orientation

$$GO(I_1, I_2) = \frac{1}{\max(N, C1)} \sum_{u,v \in I: \sqrt{\frac{\partial I_1}{\partial u}^2 + \frac{\partial I_1}{\partial v}^2} > t1 \cap \sqrt{\frac{\partial I_2}{\partial u}^2 + \frac{\partial I_2}{\partial v}^2} > t2} \frac{2 - (\ln(|cos^{-1}(\theta(u,v)| + 1))}{2}$$

$$\text{mit } \theta(u, v) = \frac{\frac{\partial I_1}{\partial u}\frac{\partial I_2}{\partial u} + \frac{\partial I_1}{\partial v}\frac{\partial I_2}{\partial v}}{\sqrt{\frac{\partial I_1}{\partial u}^2 + \frac{\partial I_1}{\partial v}^2} \sqrt{\frac{\partial I_2}{\partial u}^2 + \frac{\partial I_2}{\partial v}^2}} \text{ und skalaren Konstanten } C1, t1, t2.$$

j) Laplace of Gaussian

$$LoG \triangleq \Delta G_\sigma(u, v) = \frac{\partial^2}{\partial u^2} G_\sigma(u, v) + \frac{\partial^2}{\partial v^2} G_\sigma(u, v) = \frac{u^2 + v^2 - 2\sigma^2}{4\sigma^2} e^{-(u^2+v^2)/2\sigma^2}$$

$$\text{mit } G_\sigma(u, v) = \frac{1}{\sqrt{2\pi\sigma^2}} exp\left( -\frac{u^2 + v^2}{2\sigma^2} \right) \text{ und der Breite des Gauß-Kernels } \sigma.$$

***Beispiele zu Histogramm-basierten Ähnlichkeitsmaßen:***

k) Mutual Information

$$MI(A,B) = \sum_{a \in A, b \in B} p(a,b) \log \frac{p(a,b)}{p(a)\,p(b)}$$

mit $p(a)$ als Wahrscheinlichkeit für das Auftreten des Wertes $a$ im Eingangsbild $I_1$,
$p(b)$ als Wahrscheinlichkeit für das Auftreten des Wertes $b$ im Eingangsbild $I_2$, und $p(a, b)$ als bedingte Wahrscheinlichkeit für das Auftreten der Werte $a$, $b$ in den Eingangsbildern $I_1$ und $I_2$.

Die andere Auswertung der Teilbereiche in Schritt (S5) während der Berechnung des Ähnlichkeitsmaßes kann beispielsweise folgendermaßen realisiert werden:

a') $MSE(w\,I_1, w\,I_2)$,
wobei w eine pixelweise Gewichtung ist und w <=1 in den Teilbereichen und w=1 in den übrigen Bereichen gilt.

a")

$$MSE\big(w_1 f_{11}(I_1) + w_2 f_{12}(I_1)\,,\, w_1 f_{21}(I_2) + w_2\, f_{22}(I_2)\big),$$

wobei $w_1$ und $w_2$ pixelweise Gewichtungen sind und für jedes Pixel $w_1 + w_2 = 1$ gilt und $f_{11}$, $f_{12}$, $f_{21}$, $f_{22}$ örtliche Filterungen sind.

g')

$$GI(I_1, I_2) = \frac{1}{N} \sum_{u,v \in I} w(u,v)\, g(u,v) \min\left(\sqrt{\frac{\partial I_1}{\partial u}^2 + \frac{\partial I_1}{\partial v}^2}, \sqrt{\frac{\partial I_2}{\partial u}^2 + \frac{\partial I_2}{\partial v}^2}\right),$$

wobei w eine pixelweise Gewichtung ist und w<=1 in den Teilbereichen und w=1 in den übrigen Bereichen gilt.

k') für die Mutual Information Berechnung wird $p(a)$ berechnet aus (w $I_1$) und $p(b)$ wird berechnet aus (w $I_2$), wobei w eine pixelweise Gewichtung [0,1] ist.

## Patentansprüche

1. Computerimplementiertes Verfahren zur geometrischen Kalibrierung einer DVT-Aufnahme im dentalen Bereich, welches die folgenden Schritte umfasst:

   (S1) Rekonstruktion eines ersten Volumens (1) aus einem Sinogramm mit einer initialen Projektionsgeometrie;
   (S2) Detektion der Metallbereiche in dem Sinogramm;
   (S3) Korrektur der Metallbereiche im Sinogramm;
   (S4) Rekonstruktion eines zweiten Volumens (2) aus dem korrigiertem Sinogramm aus dem Schritt (S3) mit der initialen oder einer variierten Projektionsgeometrie;
   (S5) geometrische Kalibrierung durch Variation der Projektionsgeometrie und Bewertung anhand eines Ähnlichkeitsmaßes zwischen einem simuliertem Sinogramm des rekonstruierten zweiten Volumens (2) und dem Sinogramm bzw. dem korrigierten Sinogramm, wobei das simulierte Sinogramm aus dem rekonstruierten zweiten Volumen (2) unter Verwendung der variierten Projektionsgeometrie berechnet wird, wobei mindestens ein Teilbereich der folgenden Daten:

   a) Sinogramm aus Schritt (S1);
   b) korrigiertes Sinogramm aus Schritt (S3);
   c) simuliertes Sinogramm;
   d) Zwischenergebnis zur Berechnung des Ähnlichkeitsmaßes abgeleitet aus mindestens einem der genannten Sinogramme a)-c) während der Berechnung des Ähnlichkeitsmaßes anders ausgewertet wird als die übrigen Bereiche der Daten, wobei der genannte Teilbereich die Metallbereiche aus Schritt (S2) einschließt.

**2.** Verfahren nach Anspruch 1, **gekennzeichnet dadurch, dass** es nach dem Schritt (S5) den folgenden Schritt umfasst: (S6) Wiederholung der Schritte (S4)-(S5).

**3.** Verfahren nach einem der vorangegangenen Ansprüche, **gekennzeichnet dadurch, dass** es nach dem Schritt (S5) den folgenden Schritt umfasst: (S7) Wiederholung der Schritte (S2)-(S5) oder (S2)-(S6).

**4.** Verfahren nach einem der vorangegangenen Ansprüche, **gekennzeichnet dadurch, dass** es nach dem Schritt (S5) den folgenden Schritt umfasst: (S8) Rekonstruktion eines dritten Volumens (3) unter Berücksichtigung der geschätzten Projektionsgeometrie und Anwendung einer Metall-Artefakt-Korrektur.

**5.** Verfahren nach einem der vorangegangenen Ansprüche, **gekennzeichnet dadurch, dass** die Detektion der Metallbereiche im Sinogramm in Schritt (S2) besteht aus:

(a) Detektion der Metallbereiche im ersten Volumen (1);
(b) Projektion der detektierten Metallbereiche ins Sinogramm.

**6.** Verfahren nach einem der Ansprüche 1-4, **gekennzeichnet dadurch, dass** die Detektion der Metallbereiche im Sinogramm in Schritt (S2) besteht aus:

(a') Erzeugung eines simulierten Sinogramms des ersten Volumens (1);
(b') Detektion der Metallbereiche im simulierten Sinogramm aus Schritt (S2)(a) und Übertragung der detektierten Metallbereiche auf das Sinogramm.

**7.** Verfahren nach Anspruch 6, **gekennzeichnet dadurch, dass** es nach dem Schritt (S4) folgenden Schritt umfasst: (a) Bestimmung der Metallbereiche im zweiten Volumen (2) mithilfe der detektierten Metallbereiche im Sinogramm.

**8.** Verfahren nach Anspruch 5 oder 7, **gekennzeichnet dadurch, dass** es nach dem Schritt (S4) folgenden Schritt umfasst: (b) Korrektur der Metallbereiche im zweiten Volumen (2) besteht aus einem oder mehreren der folgenden Schritte:
(b1) Füllen der Metallbereiche im zweiten Volumen (2) mit Werten aus dem rekonstruierten ersten Volumen (1) oder künstlichen Werten hinweisend auf die Metallbereiche; (b2) Gewichtetes Überblenden der Werte aus Schritt (S4)(b1) mit den Werten aus dem zweiten Volumen (2).

**9.** Verfahren nach einem der vorangegangenen Ansprüche, **gekennzeichnet dadurch, dass** die Korrektur der Metallbereiche im Sinogramm in Schritt (S3) besteht aus einem oder mehreren der folgenden Schritte: (a) Füllen der Metallbereiche im korrigierten Sinogramm mit neuen Pixelwerten, welche entweder aus den Nachbar-Pixeln berechnet werden oder künstlichen Pixelwerten entsprechen; (b) Gewichtetes Überblenden der neuen Pixelwerte aus Schritt (S3)(a) mit den Pixelwerten dem Sinogramm.

**10.** Verfahren nach einem der vorangegangenen Ansprüche, **gekennzeichnet dadurch, dass** die andere Auswertung mindestens eines Teilbereichs der genannten Daten während der Berechnung des Ähnlichkeitsmaßes in Schritt (S5) eine pixelweise Gewichtung umfasst, welche vorzugsweise in dem Wertebereich 0 bis 1 liegt.

**11.** Verfahren nach einem der vorangegangenen Ansprüche, **gekennzeichnet dadurch, dass** die andere Auswertung mindestens eines Teilbereichs der genannten Daten während der Berechnung des Ähnlichkeitsmaßes in Schritt (S5) eine örtliche Filterung umfasst.

**12.** Computerprogramm umfassend computerlesbaren Code, das wenn es von einem computergestützten DVT-System (1) ausgeführt wird dieses veranlasst, die Verfahrensschritte einer der vorhergehenden Verfahrensansprüche auszuführen.

**13.** Computergestütztes DVT-System umfassend ein Röntgengerät (2) und eine Recheneinheit (8), die zur Ausführung des Computerprogramms nach Anspruch 12 konfiguriert ist.

**Claims**

**1.** Computer-implemented method for the geometric calibration of a CBCT image in the dental field, which comprises the following steps:

(S1) reconstructing a first volume (1) from a sinogram with an initial projection geometry;

(S2) detecting the metal areas in the sinogram;

(S3) correcting the metal areas in the sinogram;

(S4) reconstructing a second volume (2) from the corrected sinogram from step (S3) with the initial or a varied projection geometry;

(S5) geometric calibration by varying the projection geometry and evaluation based on a similarity measure between a simulated sinogram of the reconstructed second volume (2) and the sinogram or the corrected sinogram, wherein the simulated sinogram is calculated from the reconstructed second volume (2) using the varied projection geometry, wherein at least a partial area of the following data:

a) sinogram from step (S1);

b) corrected sinogram from step (S3);

c) simulated sinogram;

d) the intermediate result for calculating the similarity measure derived from at least one of said sinograms a)-c) is evaluated differently than the remaining areas of the data during the calculation of the similarity measure, wherein said partial area includes the metal areas from step (S2).

2. Method according to Claim 1, **characterized in that** it comprises the following step after step (S5): (S6) repeating steps (S4)-(S5).

3. Method according to one of the preceding claims, **characterized in that** it comprises the following step after step (S5): (S7) repeating steps (S2)-(S5) or (S2)-(S6).

4. Method according to one of the preceding claims, **characterized in that** it comprises the following step after step (S5): (S8) reconstructing a third volume (3) taking into account the estimated projection geometry and applying a metal artifact correction.

5. Method according to one of the preceding claims, **characterized in that** the detection of the metal areas in the sinogram in step (S2) consists of:

(a) detecting the metal areas in the first volume (1);

(b) projecting the detected metal areas into the sinogram.

6. Method according to one of Claims 1-4, **characterized in that** the detection of the metal areas in the sinogram in step (S2) consists of:

(a') generating a simulated sinogram of the first volume (1);

(b') detecting the metal areas in the simulated sinogram from step (S2)(a) and transferring the detected metal areas to the sinogram.

7. Method according to Claim 6, **characterized in that** it comprises the following step after step (S4): (a) determining the metal areas in the second volume (2) using the detected metal areas in the sinogram.

8. Method according to Claim 5 or 7, **characterized in that** it comprises the following step after step (S4): (b) correcting the metal areas in the second volume (2) consists of one or more of the following steps: (b1) filling the metal areas in the second volume (2) with values from the reconstructed first volume (1) or artificial values indicative of the metal areas; (b2) weighted blending of the values from step (S4)(b1) with the values from the second volume (2).

9. Method according to one of the preceding claims, **characterized in that** correcting the metal areas in the sinogram in step (S3) consists of one or more of the following steps: (a) filling the metal areas in the corrected sinogram with new pixel values which are either calculated from the neighbouring pixels or correspond to artificial pixel values; (b) weighted blending of the new pixel values from step (S3)(a) with the pixel values of the sinogram.

10. Method according to one of the preceding claims, **characterized in that** the other evaluation of at least a partial area of said data during the calculation of the similarity measure in step (S5) comprises a pixel-wise weighting, which preferably lies in the value range 0 to 1.

11. Method according to one of the preceding claims, **characterized in that** the other evaluation of at least a partial area of said data during the calculation of the similarity measure in step (S5) comprises local filtering.

12. Computer program comprising computer-readable code which, when it is executed by a computerized CBCT system (1), prompts said system to execute the method steps of one of the preceding method claims.

13. Computerized CBCT system comprising an X-ray device (2) and a computing unit (8) which is configured to execute the computer program according to Claim 12.


**Revendications**

1. Procédé mis en œuvre par ordinateur pour l'étalonnage géométrique d'une imagerie par tomographie volumétrique numérique (TVN) dans le domaine dentaire, qui comprend les étapes suivantes :

(S1) reconstruction d'un premier volume (1) à partir d'un sinogramme ayant une géométrie de projection initiale ;
(S2) détection des régions métalliques dans le sinogramme ;
(S3) correction des régions métalliques dans le sinogramme ;
(S4) reconstruction d'un second volume (2) à partir du sinogramme corrigé de l'étape (S3) avec la géométrie de projection initiale ou une géométrie de projection modifiée ;
(S5) réalisation d'un étalonnage géométrique en faisant varier la géométrie de projection et
évaluation au moyen d'une mesure de similarité entre un sinogramme simulé du second volume reconstruit (2) et ledit sinogramme ou le sinogramme corrigé, le sinogramme simulé étant calculé à partir du second volume reconstruit (2) en utilisant la géométrie de projection modifiée, au moins une région partielle des données suivantes :

a) sinogramme de l'étape (SI) ;
b) sinogramme corrigé de l'étape (S3) ;
c) sinogramme simulé ;
d) résultat intermédiaire pour le calcul de la mesure de similarité dérivée d'au moins un desdits sinogrammes a)-c) est évaluée différemment des régions restantes des données pendant le calcul de la mesure de similarité, ladite région partielle comprenant les régions métalliques de l'étape (S2).

2. Procédé selon la revendication 1, **caractérisé en ce qu'**il comprend, après l'étape (S5), l'étape suivante : (S6) répétition des étapes (S4)-(S5).

3. Procédé selon l'une des revendications précédentes, **caractérisé en ce qu'**il comprend, après l'étape (S5), l'étape suivante : (S7) répétition des étapes (S2)-(S5) ou (S2)-(S6).

4. Procédé selon l'une des revendications précédentes, **caractérisé en ce qu'**il comprend, après l'étape (S5), l'étape suivante : (S8) reconstruction d'un troisième volume (3) en tenant compte de la géométrie de projection estimée et en appliquant une correction d'artefact métallique.

5. Procédé selon l'une des revendications précédentes, **caractérisé en ce que** la détection des régions métalliques dans le sinogramme à l'étape (S2) consiste à :

(a) détecter des régions métalliques dans le premier volume (1) ;
(b) projeter des régions métalliques détectées dans le sinogramme.

6. Procédé selon l'une des revendications 1 à 4, **caractérisé en ce que** la détection des régions métalliques dans le sinogramme à l'étape (S2) consiste à :

(a) générer un sinogramme simulé du premier volume (1) ;
(b') détecter des régions métalliques dans le sinogramme simulé de l'étape (S2)(a) et transférer des régions métalliques détectées sur le sinogramme.

**7.** Procédé selon la revendication 6, **caractérisé en ce qu'**il comprend, après l'étape (S4), l'étape suivante : (a) détermination des régions métalliques dans le second volume (2) à l'aide des régions métalliques détectées dans le sinogramme.

**8.** Procédé selon la revendication 5 ou 7, **caractérisé en ce qu'**il comprend, après l'étape (S4), l'étape suivante : (b) correction des régions métalliques dans le second volume (2) consistant en une ou plusieurs des étapes suivantes :

    (b1) remplissage des régions métalliques dans le second volume (2) avec des valeurs provenant du premier volume reconstruit (1) ou des valeurs artificielles indicatives des régions métalliques ;
    (b2) combinaison de manière pondérée des valeurs provenant de l'étape (S4)(b1) avec les valeurs provenant du second volume (2).

**9.** Procédé selon l'une des revendications précédentes, **caractérisé en ce que** la correction des régions métalliques dans le sinogramme à l'étape (S3) consiste en une ou plusieurs des étapes suivantes : (a) remplissage des régions métalliques dans le sinogramme corrigé avec de nouvelles valeurs de pixels, qui sont soit calculées à partir des pixels voisins, soit correspondent à des valeurs de pixels artificielles ; (b) fusion pondérée des nouvelles valeurs de pixels de l'étape (S3)(a) avec les valeurs de pixels du sinogramme.

**10.** Procédé selon l'une des revendications précédentes, **caractérisé en ce que** l'autre évaluation d'au moins une partie desdites données pendant le calcul de la mesure de similarité à l'étape (S5) comprend une pondération pixel par pixel, qui est de préférence comprise dans la plage de valeurs de 0 à 1.

**11.** Procédé selon l'une des revendications précédentes, **caractérisé en ce que** l'autre évaluation d'au moins une partie desdites données pendant le calcul de la mesure de similarité à l'étape (S5) comprend un filtrage local.

**12.** Programme informatique comprenant un code lisible par ordinateur qui, lorsqu'il est exécuté par un système TVN assisté par ordinateur (1), amène ce dernier à exécuter les étapes de procédé de l'une des revendications de procédé précédentes.

**13.** Système TVN assisté par ordinateur comprenant un appareil de radiographie (2) et une unité de calcul (8) qui est configurée pour exécuter le programme informatique selon la revendication 12.

FIG. 1

FIG. 2

FIG. 3

15

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HAHN ANDREAS et al.** Two methods for reducing moving metal artifacts in cone-beam CT. *Medical Physics.*, vol. 45 (8), ISSN 0094-2405, 3671-3680
- Artifact-resistant motion estimation with a patient-specific artifact model for motion-compensated cone-beam CT. **BREHM M. et al.** Medical Physics. John Wiley and Sons Ltd, 2013, vol. 40
- **MAUR SUSANNE**. *Geometrische Autokalibrierung für die dentale Volumentomographie*, 22 June 2020, 1-174, http://www.ub.uniheidelberg.de/archiv/28433